# EUROPEAN PATENT SPECIFICATION

(11) **EP 3 904 452 B1**
(45) Date of publication and mention of the grant of the patent: **02.12.2026**
(21) Application number: 19905590.6
(22) Date of filing: 18.10.2019
(51) Int. Cl.: C08K 5/19, C08L 27/16, C08J 5/00

(54) **RESIN COMPOSITION, METHOD FOR PRODUCING RESIN COMPOSITION, MOLDED ARTICLE, AND METHOD FOR PRODUCING MOLDED ARTICLE**
HARZZUSAMMENSETZUNG, VERFAHREN ZUR HERSTELLUNG EINER HARZZUSAMMENSETZUNG, FORMKÖRPER UND VERFAHREN ZUR HERSTELLUNG EINES FORMKÖRPERS
COMPOSITION DE RÉSINE, PROCÉDÉ DE PRODUCTION D'UNE COMPOSITION DE RÉSINE, ARTICLE MOULÉ ET PROCÉDÉ DE PRODUCTION D'ARTICLE MOULÉ

(30) Priority: 27.12.2018 JP 2018245941
(43) Date of publication of application: 03.11.2021
(73) Proprietor: Kureha Corporation, Chuo-ku Tokyo 103-8552 (JP)
(72) Inventor: MIYASHITA, Tatsuaki, Tokyo 103-8552 (JP); SUZUKI, Kazuyuki, Tokyo 103-8552 (JP)
(74) Representative: Novagraaf Group
(86) International application number: PCT/JP2019/041182
(87) International publication number: WO 2020/137116

(56) References cited:
- WO-A1-2013/039119
- WO-A1-2017/043467
- JP-A- 2015 063 621
- JP-A- 2016 531 964
- JP-A- 2017 029 934
- JP-A- 2018 062 111
- JP-A- H11 323 052
- US-A1- 2017 096 553
- US-B1- 6 610 766
- DATABASE WPI Week 200606, Derwent World Patents Index; AN 2006-050647, XP002805490

## Description

### [TECHNICAL FIELD]

The present invention relates to a resin composition, a method of producing a resin composition, a molded article, and a method of producing a molded article, and particularly relates to a resin composition containing a vinylidene fluoride polymer, a method of producing the same, as well as a molded article of the resin composition containing a vinylidene fluoride polymer and a method of producing the same.

### [BACKGROUND ART]

Vinylidene fluoride resins exhibit high strength, chemical resistance, heat resistance, and a ferroelectric property, and thus are used in various fields. Patent Document 1 discloses a polyvinylidene fluoride resin composition that contains an alkyl quaternary ammonium sulfate or an alkyl quaternary ammonium sulfite in a polyvinylidene fluoride resin, and also indicates that the polyvinylidene fluoride resin composition excels in transparency. Due to such excellent transparency, fields of use of vinylidene fluoride resins such as application in optical members is further expanded.

JP 2005 350621 A describes a polyvinylidene fluoride resin composition containing 100 parts by weight of a polyvinylidene fluoride resin, 1 to 4 parts by weight of a quaternary ammonium salt, and 10 to 20 parts by weight of a conductive carbon black. The weight ratio of the quaternary ammonium salt and the conductive carbon black is in a range of 1/10 to 1/2. Also disclosed is a method for producing a molded product containing the polyvinylidene fluoride resin composition.

US 6 610 766 B1 refers to polyvinylidene fluoride resin compositions comprising 100 parts by weight of a polyvinylidene fluoride resin, and from 0.03 to 10 parts by weight of at least one compound selected from the group consisting of alkyl quaternary ammonium sulfates and alykl quaternary ammonium sulfites. Formed molded products comprising the polyvinylidene fluoride resin compositions are also described.

From JP H11 323052 A a composition is known prepared by blending (A) 100 parts by weight of a poly(vinylidene fluoride)-based resin, and (B) 0.03 to 10 parts by weight of a quaternary ammonium compound, selected from a group consisting of (i) an alkyl quaternary ammonium sulfate of formula **I,** wherein R¹ to R⁴ are each an alkyl, and R⁵ is an alkyl or the like, and (ii) an alkyl quaternary ammoniums ulfite of formula **II,** wherein R⁶ to R⁹ are each an alkyl, and R¹⁰ is an alkyl or the like.

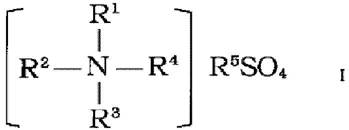

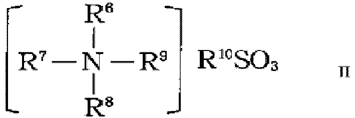

The composition can be e.g. be used as an electrification controlling material for an electronic part-packaging material, wall paper or an atistytic partition.

### [Citation List]

### [Patent Document]

Patent Document 1: JP 11-323052 A

### [SUMMARY OF INVENTION]

### [TECHNICAL PROBLEM]

However, it was found that the thermal stability of the vinylidene fluoride resin composition containing an alkyl quaternary ammonium sulfate in a polyvinylidene fluoride resin is poor, and that the resin composition may yellow depending on the heating temperature during molding. To avoid this problem, use of such vinylidene fluoride resin composition must be limited to use in a thin molded article in which yellowing is not noticeable. Therefore, even though such vinylidene fluoride resin compositions exhibit transparency, a problem exists in that applications of such compositions as a transparent material are limited to a very narrow range.

Thus, the present invention was completed in light of the problems described above, and an object of the present invention is to provide a resin composition that can suppress yellowing in a molded article.

### [SOLUTION TO PROBLEM]

In order to solve the problems described above, a resin composition according to the present invention contains a vinylidene fluoride polymer as a main component, and further contains an alkyl quaternary ammonium sulfate, and a percentage of irregular sequences in the vinylidene fluoride polymer is 4.3 % or greater. The percentage of irregular sequences is determined in such a manner that 40 mg of the vinylidene fluoride polymer is dissolved in 0.8 ml of deuterated dimethylformamide and ¹⁹F-NMR measurements are implemented at room temperature to obtain ¹⁹F-NMR spectrum having peaks at positions of -91.6 ppm, -92.1 ppm, -94.7 ppm, -113.5 ppm, and -115.9 ppm, and the percentage of irregular sequences is calculated by equation (1) below: $Irregular Sequence Percentage \left(%\right) = \left[\left\{\left(S1+S2\right)/2\right\}/S0\right] \times 100$ (1) where S0 is a total of surface areas of the peaks at the positions of - 91.6 ppm, -92.1 ppm, -94.7 ppm, -113.5 ppm, and -115.9 ppm, S1 is a surface area of the peak at the position of -113.5 ppm, and S2 is a surface area of the peak at the position of -115.9 ppm.

Furthermore, in order to solve the problems described above, a method of producing the resin composition according to the present invention is a method of producing a resin composition that contains a vinylidene fluoride polymer as a main component, the method including adding an alkyl quaternary ammonium sulfate to a vinylidene fluoride polymer having a percentage of irregular sequences of 4.3 % or greater. The percentage of irregular sequences is determined as described above.

Moreover, the present invention refers to a method of producing a molded article of a resin composition comprising a vinylidene fluoride polymer as a main component, whereby the method comprises molding the above described resin composition resin composition at a temperature of at least 190°C. The molded article obtained is a molded article of a resin composition containing a vinylidene fluoride polymer as a main component, and has a yellowness index (YI) value of 40 or less, a haze of 40% or less, and preferably a thickness of 1 mm or greater.

### [ADVANTAGEOUS EFFECTS OF INVENTION]

According to the resin composition of the present invention, yellowing of a molded article can be suppressed.

### [DESCRIPTION OF EMBODIMENTS]

An embodiment of a resin composition according to the present invention is described hereinafter.

**The** resin composition according to the present embodiment contains a vinylidene fluoride polymer as a main component, and further contains an alkyl quaternary ammonium sulfate.

### <Vinylidene fluoride polymer>

### (Composition)

**The** vinylidene fluoride polymer according to the present embodiment is a polymer containing vinylidene fluoride as a main constituent component. "Containing vinylidene fluoride as a main constituent component" indicates that the vinylidene fluoride polymer contains 50 mol% or greater of structural units derived from vinylidene fluoride. **The** vinylidene fluoride polymer may be a homopolymer of vinylidene fluoride containing substantially 100 mass% of structural units derived from vinylidene fluoride, or may be a copolymer of vinylidene fluoride further containing structural units derived from other monomers that can copolymerize with vinylidene fluoride. Examples of other monomers that can copolymerize with vinylidene fluoride include tetrafluoroethylene, trifluoroethylene, chlorotrifluoroethylene, hexafluoropropylene, vinyl fluoride, 2,3,3,3-tetrafluoropropene, pentafluoropropene, perfluoromethyl vinyl ether, and perfluoropropyl vinyl ether. One type of other monomer may be used, or two or more types may be used. **The** content of the structural units derived from the other monomers is preferably not greater than 10 mol%, more preferably not greater than 5 mol%, and even more preferably not greater than 2 mol%, of the total of all structural units. A single type of vinylidene fluoride polymer can be used alone, or two or more types thereof can be used in combination.

Among vinylidene fluoride polymers, a homopolymer of vinylidene fluoride is preferable from the perspective of contamination resistance, ozone resistance, and solvent resistance. On the other hand, from the perspective of flexibility and tear strength, a vinylidene fluoride copolymer alone or a blend of a vinylidene fluoride copolymer and a vinylidene fluoride homopolymer is preferable. From the perspective of flexibility, the vinylidene fluoride copolymer is preferably a vinylidene fluoride-hexafluoropropylene copolymer.

### (Irregular sequence)

**The** percentage of irregular sequences contained in the vinylidene fluoride polymer of the present embodiment is 4.3 % or greater. Here, an irregular sequence refers to a head-to-head bond and a tail-to-tail bond in a polymer to be head-to-tail bonded. For example, in a vinylidene fluoride polymer, "CF₂" and "CH₂" are typically bonded in an alternating manner, but there may be portions in which "CF₂" and "CF₂" are bonded, or portions in which "CH₂" and "CH₂" are bonded together. A portion at which "CF₂" is bonded to another "CF₂" or "CH₂" is bonded to another "CH₂" is an irregular sequence.

**In** relation to the total number of bonds, the percentage of irregular sequences in the vinylidene fluoride polymer need only be 4.3 % or greater,, and preferably not less than 4.5%. **The** upper limit is not particularly limited, but in relation to the total number of bonds, is preferably less than 6%, more preferably less than 5.5%, and even more preferably less than 5%. **The** percentage of irregular sequences in the vinylidene fluoride polymer can be adjusted by the polymerization temperature in the production of the polymer. **In** addition, a commercially available polymer in which the percentage of irregular sequences is within the range described above may be used.

**The** percentage of irregular sequences is determined from a ¹⁹F-NMR measurement of the vinylidene fluoride polymer. More specifically, 40 mg of the vinylidene fluoride polymer is dissolved in 0.8 ml of deuterated dimethylformamide (D7-DMF) and ¹⁹F-NMR measurements are implemented at room temperature. The resulting ¹⁹F-NMR spectrum has five major peaks at positions of -91.6 ppm, -92.1 ppm, -94.7 ppm, -113.5 ppm, and -115.9 ppm. Of these peaks, the peaks at -113.5 ppm and -115.9 ppm are identified as peaks derived from irregular sequences. Accordingly, the percentage of irregular sequences is calculated from the following equation (1) with the total of the surface areas of each of the five peaks being denoted by S0, the surface area of the peak at -113.5 ppm being denoted by S1, and the surface area of the peak at -115.9 ppm being denoted by S2. $Irregular Sequence Percentage \left(%\right) = \left[\left\{\left(S1+S2\right)/2\right\}/S0\right] \times 100$ (1) When the percentage of irregular sequences is within the range described above, for a case in which a resin composition containing an alkyl quaternary ammonium sulfate according to the present embodiment is used, yellowing of an obtained molded article can be suppressed even when the structure of the molded article has a thickness of 1 mm or greater, and the resin composition is molded at 190°C or higher. Note that in the present specification, "yellowing is suppressed" means that the yellowness index (YI) value is not greater than 40. The **YI** value will be described below.

In a speculated mechanism of yellowing, the alkyl quaternary ammonium sulfate decomposes when heated and produces an amine. The resulting amine attacks a modified terminal of the vinylidene fluoride polymer, and thereby an HF-removal reaction proceeds. Once the HF-removal reaction occurs and a C=C bond is formed in the main chain, an HF-removal reaction is more likely to occur at a CH₂-CF₂ adjacent to the C=C bond, and the HF-removal reaction propagates along the main chain skeleton in a chain-like manner. It is thought that as a result, a long chain polyene structure is generated, and yellowing occurs. It is also thought that the presence of irregular sequences in the vinylidene fluoride polymer serves as a stopper for the HF-removal chain reaction, and as a result, a long chain polyene is less likely to be produced, and therefore yellowing can be suppressed. However, with the resin composition according to the present embodiment, the percentage of irregular sequences need only be equal to or greater than a predetermined value such that yellowing of the obtained molded article is suppressed, and the scope of the invention is not limited by this mechanism.

### (Absorbance ratio)

According to the speculated yellowing mechanism described above, the number of modified terminals among the terminals of the vinylidene fluoride polymer is preferably few. From this perspective, in the infrared absorption spectrum, the vinylidene fluoride polymer of the present embodiment preferably has an absorbance ratio (A_{R}), expressed by equation (2) below, of not greater than 0.09. ${A}_{R} = {A}_{1700 - 1800} / {A}_{3023}$ (2) In equation (2), A₁₇₀₀₋₁₈₀₀ is the absorbance originating from the stretching vibration of carbonyl groups detected in a range from 1700 to 1800 cm⁻¹, and A₃₀₂₃ is the absorbance originating from the stretching vibration of CH detected near 3023 cm⁻¹. Thus, the value of A_{R} serves as a scale indicating the quantity of carbonyl groups present in the vinylidene fluoride polymer. When the monomer that constitutes the vinylidene fluoride polymer does not contain a carbonyl group, the value of A_{R} serves as a scale indicating the quantity of ester terminals and carbonate terminals present therein. Note that when a monomer containing a carbonyl group such as acrylic acid is used as the monomer constituting the vinylidene fluoride polymer, the absorbance ratio (A_{R}) is a value reflecting the stretching vibration of the carbonyl group in the monomer. However, if the obtained absorbance ratio (A_{R}) is not greater than 0.09, an absorbance ratio (A_{R}) that reflects only the stretching vibration of the carbonyl groups at the ester terminal and carbonate terminal is inevitably a value smaller than 0.09.

As described above, from the perspective of suppressing yellowing, the value of the absorbance ratio (A_{R}) is preferably less than or equal to 0.09, more preferably less than or equal to 0.08, and even more preferably less than or equal to 0.06.

If the value of the absorbance ratio (A_{R}) is within the range described above, the degree of yellowing can be further reduced, and even if the resin composition is molded at a temperature higher than 190°C, for example a temperature of 250°C or higher, yellowing of the obtained molded article can be suppressed.

The absorbance ratio is determined from the absorbance according to the infrared absorption spectrum using an infrared spectrophotometer. More specifically, first, the vinylidene fluoride polymer is hot-pressed at 230°C to fabricate a pressed sheet with a thickness from 50 µm to 100 µm. Next, the infrared absorption spectrum of the pressed sheet is measured in a range from 1500 cm⁻¹ to 4000 cm⁻¹ using an infrared spectrophotometer (for example, the FT/IR-4100 (available from JASCO Corporation)). When a line connecting the absorbance at 1660 cm⁻¹ and the absorbance at 1900 cm⁻¹ is defined as a baseline, the maximum absorbance in a range from 1700 cm⁻¹ to 1800 cm⁻¹ is denoted by A₁₇₀₀₋₁₈₀₀. Meanwhile, the maximum absorbance at 3023±10 cm⁻¹ when a line connecting the absorbance at 2900 cm⁻¹ and the absorbance at 3300 cm⁻¹ is defined as a baseline, is denoted by A₃₀₂₃.

### (Other physical properties)

Regarding the viscosity of the vinylidene fluoride polymer of the present embodiment, from the viewpoint of processability, the inherent viscosity is preferably from 0.8 dL/g to 2.0 dL/g, more preferably from 0.8 dL/g to 1.3 dL/g, and even more preferably from 0.9 dL/g to 1.2 dL/g. **The** inherent viscosity can be determined as a logarithmic viscosity at 30°C of a solution obtained by dissolving 4 g of the vinylidene fluoride polymer in 1 liter of **N,N-**dimethylformamide.

Furthermore, from the perspective of imparting sufficient mechanical strength, gas barrier properties, and solvent resistance to the molded article, the melting point of the vinylidene fluoride polymer in the present embodiment is preferably from 130 to 190°C, more preferably from 150 to 180°C, and even more preferably from 160 to 180°C. **The** melting point can be measured using differential scanning calorimetry.

### (Method of producing vinylidene fluoride polymer)

Examples of methods for producing the vinylidene fluoride polymer include emulsion polymerization, soap-free emulsion polymerization, seed emulsion polymerization, suspension polymerization, mini-emulsion polymerization and solution polymerization. Among these, from the perspective of being able to reduce the absorbance ratio (A_{R}), emulsion polymerization, soap-free emulsion polymerization, and seed emulsion polymerization are preferable.

Emulsion polymerization is a type of radical polymerization. **It** is a polymerization method performed by mixing a medium such as water, a monomer hardly-soluble in the medium, and an emulsifier (hereinafter, also referred to as "surfactant"), and adding a polymerization initiator soluble in the medium. **In** emulsion polymerization, a dispersion medium, a surfactant, and a polymerization initiator are used in addition to vinylidene fluoride and other monomers.

Soap-free emulsion polymerization is an emulsion polymerization that is implemented without using an ordinary emulsifier like that used in the above-described emulsion polymerization.

Seed emulsion polymerization is polymerization that is implemented by coating microparticles obtained by the above-described emulsion polymerization or soap-free emulsion polymerization with a polymer formed from other monomers. Vinylidene fluoride and other monomers, a dispersion medium, a surfactant, and a polymerization initiator, etc. are further used in a dispersion of the microparticles.

Suspension polymerization is a polymerization method that is implemented by dissolving an oil-soluble polymerization initiator in a water-insoluble monomer in water containing an reagent such as a suspending agent, and then suspending and dispersing the materials through mechanical agitation. In suspension polymerization, polymerization progresses in monomer droplets, and thereby vinylidene fluoride polymer particles are obtained.

Mini-emulsion polymerization is a polymerization method that is implemented by reducing the size of monomer droplets to a sub-micron size by applying a strong shearing force using an apparatus such as an ultrasonic generator. **In** mini-emulsion polymerization, in order to stabilize the monomer droplets that have been reduced in size, a water-insoluble substance called a hydrophobe is added. **In** ideal mini-emulsion polymerization, microparticles of the vinylidene fluoride polymer are obtained by polymerizing monomer droplets.

### <Alkyl quaternary ammonium sulfate>

**The** alkyl quaternary ammonium sulfate of the present embodiment is a compound represented by the following formula (3).

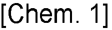

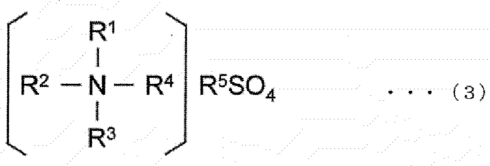

.

In formula (3), R¹ to R⁴ denote alkyl groups having from 1 to 10 carbons and may be the same or different. Examples of the alkyl group include short-chain alkyl groups such as a methyl group, an ethyl group, a propyl group, an isopropyl group, a butyl group, a pentyl group, a hexyl group, a heptyl group, and an octyl group. From the perspective of ensuring sufficient transparency of the molded article, the total number of carbons in the alkyl groups of R¹ to R⁴ is preferably from 6 to 30, more preferably from 6 to 24, and particularly preferably from 8 to 20.

In formula (3), R⁵ is an alkyl group, a fluoroalkyl group, or a hydrogen atom. The alkyl group of R⁵ is a short-chain alkyl group having from 1 to 10 carbons, such as a methyl group or an ethyl group. The fluoroalkyl group of R⁵ is a short-chain fluoroalkyl group having from 1 to 10 carbons, such as CF₃ or C₂F₅. Of these, R⁵ is preferably hydrogen.

Specific examples of these include salts formed of alkyl quaternary ammonium cations such as (C₂H₅)₄N⁺, (C₃H₇)₄N⁺, (C₄H₉)₄N⁺, and (C₅H₁₁)₄N⁺, and anions such as CF₃SO₄⁻, CH₃SO₄⁻, and HSO₄⁻. These compounds may each be used alone or may be used in combinations of two or more types. Among these, from the perspective of ensuring sufficient transparency of the molded article, a hydrogen sulfate of an alkyl quaternary ammonium is preferable, tetraethylammonium hydrogensulfate [(C₂H₅)₄NHSO₄], tetrapropylammonium hydrogensulfate [(C₃H₇)₄NHSO₄], tetrabutylammonium hydrogensulfate [(C₄H₉)₄NHSO₄], tetrapentylammonium hydrogensulfate [(C₅H₁₁)₄NHSO₄], and tetrahexylammonium hydrogensulfate [(C₆H₁₃)₄NHSO₄] are more preferable, at least one selected from tetraethylammonium hydrogensulfate, tetrapropylammonium hydrogensulfate, and tetrabutylammonium hydrogensulfate is particularly preferable, and tetrabutylammonium hydrogensulfate is most preferable.

From the perspective of suppressing yellowing, the content of the alkyl quaternary ammonium sulfate is preferably not greater than 10 parts by weight, more preferably not greater than 5 parts by weight, and even more preferably not greater than 1.3 parts by weight, per 100 parts by weight of the vinylidene fluoride polymer. Furthermore, from the perspective of maintaining transparency, the content is preferably at least 0.3 parts by weight, more preferably at least 0.7 parts by weight, and even more preferably at least 0.8 parts by weight, per 100 parts by weight of the vinylidene fluoride polymer.

### (Other components)

**The** resin composition according to the present embodiment may further contain other components in a range in which the effects of the present embodiment can be obtained. One type of the other component may be used, or two or more types may be used. **The** content of additives in the resin composition can be appropriately determined within a range in which both the effects of the present embodiment and the effects of the additives are obtained. Examples of other components described above include additives and polymers besides the vinylidene fluoride polymer. Examples of additives include thermal stabilizers, **UV** absorbers, lubricants, plasticizers, bluing agents, and anti-coloration agents.

### <Method of producing resin composition>

**The** method of producing a resin composition according to the present embodiment is not particularly limited, and for example, a resin composition can be obtained by mixing a powder or pellets of a vinylidene fluoride polymer and an alkyl quaternary ammonium sulfate.

Examples of the device for mixing the materials of the resin composition include a Henschel blender, a cylindrical mixer, a screw-type mixer, a screw-type extruder, a turbulizer, a Nauta mixer, a V-type mixer, a ribbon mixer, a double arm kneader, a flow-type mixer, an air flow-type mixer, a rotary disk-type mixer, a roll mixer, a rolling mixer, and a Loedige mixer.

In addition, a pellet-formed resin composition can be obtained by drying a mixture of a vinylidene fluoride polymer and an alkyl quaternary ammonium sulfate and melt-extruding the obtained dried product. Examples of the extruder include a single screw extruder, a co-rotating twin screw extruder, and a counter-rotating twin screw extruder.

As the vinylidene fluoride polymer and the alkyl quaternary ammonium sulfate, the vinylidene fluoride polymer and alkyl quaternary ammonium sulfate described above may be used. Additionally, the addition amount of the alkyl quaternary ammonium sulfate may be adjusted such that the content in the resin composition is within the range described above.

### <Molded article>

The molded article has a thickness of 1 mm or greater and is molded from the resin composition of the present embodiment. The shape of the molded article can be appropriately determined within a range in which the molding described below is feasible. A molded article having a thickness of 1 mm or greater refers to a molded article having a thickness of 1 mm or greater at the thinnest portion. Also, the term thickness is intended to mean an average value of any multiple (e.g., five) thickness measurements. A **YI** value of 40 or less, measured using spectrophotometric colorimetry, and a haze of 40% or less can be realized even in a molded article having a thickness of 1 mm or greater by using the resin composition according to the present embodiment. Furthermore, such **YI** value and haze can be realized even in a molded article having a thickness of 2 mm or greater, and such **YI** value and haze value can even be realized in a molded article having a thickness of 3 mm or greater. That is, the thickness of the molded article according to the present embodiment may be 1 mm or greater, 2 mm or greater, or even 3 mm or greater.

In addition, as described above, even if the thickness of the molded article of the present embodiment is 1 mm or greater, the **YI** value measured using spectrophotometric colorimetry may be 40 or less, may be 30 or less, and may be 20 or less. Note that the **YI** value in the present specification is an average value obtained by placing a white board on the molded article, measuring, through a reflection measurement method, any four locations of the molded article using a colorimetry color difference meter (for example, Color Meter ZE 6000 (available from Nippon Denshoku Industries Co., Ltd.)), and calculating the average value in accordance with ASTM D1925.

The haze of the molded article of the present embodiment is not greater than 40%. The haze of the molded article can be measured by a known method using a commercially available haze meter. In addition, an average value of measurements taken at any four locations is used as the haze of the molded article.

### (Method of producing a molded article)

A molded article can be produced by a known method such as injection molding or press molding, calendar molding, extrusion molding, and melt spinning, in the same manner as the production of a conventional molded product of a vinylidene fluoride polymer. Furthermore, the production method thereof can be selected in accordance with the desired shape of the molded article.

**The** form of the resin composition to be supplied for molding the molded article is only required to be applicable to the molding method. Such a form may be, for example, a powder, but may also be pellets, flakes, a compression molded product of the powder, or a molded product to be accommodated in a mold. **In** the production of the molded article, the resin composition is heated to a temperature at which the resin composition melts sufficiently, and is melted and molded.

### (Injection molding)

Injection molding is a method of obtaining a molded article by, for example, supplying a resin composition to an injection molding machine, melting the resin composition by heating, pouring the molten resin composition into a mold, and then injecting, and cooling.

### (Press molding)

Press molding is generally a method of obtaining a molded article by filling a mold with a resin composition, hot pressing the resin composition at a high temperature using a compression molding machine (e.g., 3 minutes at 230°C and a pressure of 5 MPa), and then cold pressing (e.g., 3 minutes at 30°C).

**The** mold used in press molding is only required to be a member that can be used for heating and pressurization and can maintain the molten resin composition in a shape to be molded. Examples of such molds include metal molds and metal sheets such as aluminum foil.

**In** a case in which the shape of the molded article in the present embodiment is a sheet-like shape, from the perspective of achieving a uniform thickness and a smooth surface of the molded article, the molten resin composition is preferably pressurized. That is, in press molding, the resin composition is preferably pressed by a press member and molded into a sheet-like shape while the resin composition is melted by heating the press member. The press member is only required to be a known member capable of implementing the aforementioned heating and pressurization.

The pressure at which cold pressing is implemented may be the same as or different from the pressure when hot pressing. The temperature and time of the cold pressing may be determined as appropriate. For example, the temperature may be from 5°C to 40°C, and the time may be from 2 minutes to 10 minutes.

### (Other steps)

**The** method of producing a molded article may further include other steps within a range in which the effect of the present embodiment can be obtained. Examples of such other steps include a preheating step in which the mold is preheated prior to molding, a molded article fabrication step in which a molded product of the resin composition is fabricated in a mold, a gradual cooling step in which the molded article after heating and press molding is gradually cooled, and an annealing step in which the obtained molded article is annealed.

### (Shape of the molded article)

**The** shape of the molded article obtained by the production method described above is not particularly limited and may be various shapes. Examples of the shape of the obtained molded article include injection molded bodies, pipe shapes, round bars, square bars, sheet shapes, film shapes, and fiber shapes.

### Summary

As described above, the resin composition according to an embodiment of the present invention contains a vinylidene fluoride polymer as a main component, and further contains an alkyl quaternary ammonium sulfate, and a percentage of irregular sequences in the vinylidene fluoride polymer is 4.3 % or greater.

In addition, in one aspect of the resin composition according to an embodiment of the present invention, in the infrared absorption spectrum, the absorbance ratio (A_{R}) expressed by the following equation is not greater than 0.09. ${A}_{R} = {A}_{1700 - 1800} / {A}_{3023}$ **In** the above equation, A₁₇₀₀₋₁₈₀₀ is the absorbance at 1700 to 1800 cm⁻¹, and A₃₀₂₃ is the absorbance at 3023 cm⁻¹.

**In** addition, in one aspect of the resin composition according to an embodiment of the present invention, the content of the alkyl quaternary ammonium sulfate is from 0.3 parts by weight to 10.0 parts by weight per 100 parts by weight of the vinylidene fluoride polymer.

Furthermore, in one aspect of the resin composition according to an embodiment of the present invention, the alkyl quaternary ammonium sulfate is an alkyl quaternary ammonium hydrogensulfate.

**In** addition, in one aspect of the resin composition according to an embodiment of the present invention, the alkyl quaternary ammonium sulfate is at least one selected from tetraethylammonium hydrogensulfate, tetrapropylammonium hydrogensulfate, and tetrabutylammonium hydrogensulfate.

Furthermore, in one aspect of the resin composition according to an embodiment of the present invention, the vinylidene fluoride polymer is a homopolymer of vinylidene fluoride or a copolymer of vinylidene fluoride and hexafluoropropylene.

**In** addition, a molded article is a molded article of a resin composition containing a vinylidene fluoride polymer as a main component, the molded article is formed from the above-described resin composition, and the molded article has a haze of not greater than 40%, a **YI** value of not greater than 40, and a thickness of 1 mm or greater.

Furthermore, a method of producing a resin composition according to an embodiment of the present invention is a method of producing a resin composition that contains a vinylidene fluoride polymer as a main component, the method including adding an alkyl quaternary ammonium sulfate to a vinylidene fluoride polymer having a percentage of irregular sequences of 4.3 % or greater.

Furthermore, a method of producing a molded article according to an embodiment of the present invention is a method of producing a molded article of a resin composition containing a vinylidene fluoride polymer as a main component, the method including molding the resin composition at 190°C or higher. **The** resin composition described above is used as the resin composition.

**In** addition, in one aspect of the method of producing a molded article according to an embodiment of the present invention, a molded article having a thickness of 1 mm or greater is obtained in the molding.

Another aspect of a molded article is a molded article of a resin composition containing a vinylidene fluoride polymer as a main component, the molded article having a haze of not greater than 40%, a YI value of not greater than 40, and a thickness of 1 mm or greater.

Examples are presented below to describe embodiments of the present invention in further detail.

### [Examples]

### [Resin composition production]

### (Resin composition 1)

Tetrabutylammonium hydrogensulfate (available from Koei Chemical Co., Ltd., hereinafter abbreviated as "TBAHS") was added to 100 parts by weight of a vinylidene fluoride polymer such that the amount of TBAHS was 1.0 parts by weight. Kynar (trade name) 740 (vinylidene fluoride homopolymer) available from Arkema S.A. was used as the vinylidene fluoride polymer. Next, the material was extruded using a co-rotating twin screw extruder (TEM-26, available from Toshiba Machine Co., Ltd.) at a cylinder temperature of 190°C, and a pellet-formed resin composition 1 was obtained.

### (Resin composition 2)

A resin composition 2 was obtained in the same manner as in the production of the resin composition 1 with the exception that the vinylidene fluoride polymer was changed to Kynar (trade name) 1000HD (vinylidene fluoride homopolymer) available from Arkema S.A.

### (Resin composition 3)

A resin composition 3 was obtained in the same manner as in the production of the resin composition 1 with the exception that the vinylidene fluoride polymer was changed to FR907 (vinylidene fluoride homopolymer) available from The 3M Company.

### (Resin composition 4)

A resin composition 4 was obtained in the same manner as in the production of the resin composition 1 with the exception that the vinylidene fluoride polymer was changed to Kynar (trade name) 2800-00 (vinylidene fluoride-hexafluoropropylene copolymer) available from Arkema S.A.

### (Resin composition 5)

A resin composition 5 was obtained in the same manner as in the production of the resin composition 1 with the exception that the vinylidene fluoride polymer was changed to Solef 6010/0001 (vinylidene fluoride homopolymer) available from Solvay S.A.

### (Resin composition 6) (not according to the present invention)

A resin composition 6 was obtained in the same manner as in the production of the resin composition 1 with the exception that the vinylidene fluoride polymer was changed to a vinylidene fluoride homopolymer (Polymer A) produced as described below. The vinylidene fluoride polymer in the resin composition 6 was produced under the same conditions as the production conditions of the polymer described in Example 4 in the patent document WO 2006/061988.

### (Resin composition 7)

A resin composition 7 was obtained in the same manner as in the production of the resin composition 1 with the exception that the amount of TBAHS was changed to 0.7 parts by weight.

### (Resin composition 8)

A resin composition 8 was obtained in the same manner as in the production of the resin composition 1 with the exception that the amount of TBAHS was changed to 3.0 parts by weight.

### (Resin composition 9)

A resin composition 9 was obtained in the same manner as in the production of resin composition 1 with the exception that the amount of TBAHS was changed to 5.0 parts by weight.

### (Resin composition 10)

A resin composition 10 was obtained in the same manner as in the production of the resin composition 1 with the exception that tetraethylammonium hydrogensulfate (available from Tokyo Chemical Industry Co., Ltd., hereinafter abbreviated as "TEAHS") was used instead of TBAHS.

### (Resin composition 11)

A resin composition 11 was obtained in the same manner as in the production of the resin composition 1 with the exception that tetrapropylammonium hydrogensulfate (available from Ardrich, hereinafter abbreviated as "TPAHS") was used instead of TBAHS.

### (Resin composition 12) (not according to the present invention)

A resin composition 12 was obtained in the same manner as in the production of the resin composition 1 with the exception that the vinylidene fluoride polymer was changed to Solef 11010/0001 (vinylidene fluoride-hexafluoropropylene copolymer) available from Solvay S.A.

### (Resin composition 13) (not according toi the present invention)

A resin composition 13 was obtained in the same manner as in the production of the resin composition 1 with the exception that the vinylidene fluoride polymer was changed to KF#1000 (vinylidene fluoride homopolymer) available from Kureha Corporation.

### (Resin composition 14) (not according to the present invention)

A resin composition 14 was obtained in the same manner as in the production of the resin composition 1 with the exception that the vinylidene fluoride polymer was changed to KF#2300 (vinylidene fluoride-hexafluoropropylene copolymer) available from Kureha Corporation.

### [Evaluation of vinylidene fluoride polymer]

The percentage of irregular sequences, the absorbance ratio (A_{R}), the inherent viscosity, and the melting point of each vinylidene fluoride polymer were determined as follows. The results are shown in Table 1.

### (Percentage of irregular sequences)

An amount of 40 mg of vinylidene fluoride polymer was dissolved in 0.8 ml of deuterated dimethylformamide (D7-DMF) and ¹⁹F-NMR measurements were implemented at room temperature. The percentage of irregular sequences was calculated from the following equation with the total of the surface areas of the five main peaks at positions of -91.6 ppm, -92.1 ppm, - 94.7 ppm, -113.5 ppm, and -115.9 ppm in the obtained ¹⁹F-NMR spectra being denoted by S0, the surface area of the peak at -113.5 ppm being denoted by S1, and the surface area of the peak at -115.9 ppm being denoted by S2. $Irregular Sequence Percentage \left(%\right) = \left[\left\{\left(S1+S2\right)/2\right\}/S0\right] \times 100$

### (Absorbance ratio (A_{R}))

The vinylidene fluoride polymer was hot-pressed at 230°C to fabricate a pressed sheet with a thickness of from 50 µm to 100 µm. The IR spectra of the fabricated pressed sheet was measured in a range of from 1500 cm⁻¹ to 4000 cm⁻¹ by using the infrared spectrophotometer FT/IR-4100 (available from JASCO Corporation). The absorbance ratio (A_{R}) was determined by the following equation. ${A}_{R} = {A}_{1700 - 1800} / {A}_{3023}$

In the above equation, A₁₇₀₀₋₁₈₀₀ is the absorbance originating from the stretching vibration of carbonyl groups detected in a range of from 1700 to 1800 cm⁻¹, and A₃₀₂₃ is the absorbance originating from the stretching vibration of CH detected near 3023 cm⁻¹. Specifically, when a line connecting the absorbance at 1660 cm⁻¹ and the absorbance at 1900 cm⁻¹ was defined as a baseline, the maximum absorbance in a range of from 1700 cm⁻¹ to 1800 cm⁻¹ was denoted by A₁₇₀₀₋₁₈₀₀. Meanwhile, when a line connecting the absorbance at 2900 cm⁻¹ and the absorbance at 3300 cm⁻¹ was defined as a baseline, the maximum absorbance at 3023±10 cm⁻¹ was denoted by A₃₀₂₃.

### (Melting point)

A measurement sample was produced by cutting out a very small piece from the molded article. The sample was subjected to measurements using a differential scanning calorimeter "DSC-1" (available from Mettler-Toledo International Inc.) while the temperature was raised from 30°C to 230°C at a rate of 10°C/minute. The melting point of the molded article was determined from the temperature of the peak top in the crystal melting peak observed in the temperature raising process.

### (Inherent viscosity)

The inherent viscosity ηi was determined from the following equation by dissolving 80 mg of the vinylidene fluoride polymer in 20 mL of N,N-dimethylformamide, and using an Ubbelohde viscometer in a 30°C thermostatic bath. $ηi = \left(1/C\right) \cdot ln \left(η/ηo\right)$ Here, η is the viscosity of the polymer solution, ηo is the viscosity of the N,N-dimethylformamide alone, and C is 0.4 (g/dl).

**Table 1**

| | Polymer | | | | | | | Ammonium Salt | |
|---|---|---|---|---|---|---|---|---|---|
| Resin Composition | Polymer | Polymerization Method | Inherent Viscosity (dL/g) | Melting Point (°C) | HFP Amount (wt.%) | Absorbance Ratio (A_{R}) | Irregular Sequence (%) | Ammonium Salt | Content (parts by weight) |
| 1 | Kynar 740 | Emulsification | 1.0 | 167 | 0 | 0.048 | 4.8 | TBAHS | 1.0 |
| 2 | Kynar 1000HD | Emulsification | 1.1 | 166 | 0 | 0.073 | 4.8 | TBAHS | 1.0 |
| 3 | FR907 | Emulsification | 1.0 | 168 | 0 | 0.074 | 4.4 | TBAHS | 1.0 |
| 4 | Kynar 2800-00 | Emulsification | 1.05 | 139 | 11 | 0.068 | 4.3 | TBAHS | 1.0 |
| 5 | Solef 601 0/0001 | Suspension | 1.05 | 170 | 0 | 0.104 | 4.4 | TBAHS | 1.0 |
| 6* | Polymer A | Suspension | 1.1 | 171 | 0 | 0.100 | 4.1 | TBAHS | 1.0 |
| 7 | Kynar 740 | Emulsification | 1.0 | 167 | 0 | 0.048 | 4.8 | TBAHS | 0.7 |
| 8 | Kynar 740 | Emulsification | 1.0 | 167 | 0 | 0.048 | 4.8 | TBAHS | 3.0 |
| 9 | Kynar 740 | Emulsification | 1.0 | 167 | 0 | 0.048 | 4.8 | TBAHS | 5.0 |
| 10 | Kynar 740 | Emulsification | 1.0 | 167 | 0 | 0.048 | 4.8 | TEAHS | 1.0 |
| 11 | Kynar 740 | Emulsification | 1.0 | 167 | 0 | 0.048 | 4.8 | TPAHS | 1.0 |
| 12* | Solef 11010/0001 | Suspension | 1.0 | 160 | 9 | 0.134 | 3.8 | TBAHS | 1.0 |
| 13* | KF#1000 | Suspension | 1.0 | 173 | 0 | 0.104 | 3.8 | TBAHS | 1.0 |
| 14* | KF#2300 | Suspension | 0.95 | 152 | 10 | 0.132 | 3.6 | TBAHS | 1.0 |

| | | | | | | | | | |
|---|---|---|---|---|---|---|---|---|---|
| * not according to the present invention | | | | | | | | | |

### [Molded article production and evaluation 1]

### (Molded article production)

The obtained resin composition was sandwiched between aluminum foils, and then further sandwiched between stainless steel (SUS) plates, and pressed at 200°C for 5 minutes under a pressure of 5 MPa using a compression molding machine (Model AYSR-5, available from Shinto Metal Industries, Ltd.). Next, the pressed article was immediately cooled (quenched) with a cold press at 30°C for 3 minutes while the pressed article remained sandwiched between the SUS plates. A sheet-like molded article was thus produced. The thickness of the molded article was measured five times for each sample using a thickness gauge "DG-925" (available from Ono Sokki Co., Ltd.), and the average value was determined. This average value was used as the thickness of the molded article.

### (Molded article evaluation)

The YI value of each molded article was calculated in accordance with ASTM D1925 by placing a white board on the molded article, and performing measurements, through a reflection measurement method, using the Color Meter ZE 6000 colorimetry color difference meter (available from Nippon Denshoku Industries Co., Ltd.). Four arbitrary locations on the molded article were measured, and the average value thereof was used as the YI value of the molded article.

The haze of each molded articles was measured using a haze meter "NDH4000" (available from Nippon Denshoku Industries Co., Ltd.) in accordance with JIS K7136. The results are shown in Table 2.

**[Table 2]**

| | Molded Article | | |
|---|---|---|---|
| Resin Composition | Haze % | YI value | Thickness mm |
| 1 | 33.1 | 16.3 | 2 |
| 2 | 29.6 | 17.2 | 2 |
| 3 | 16.2 | 23.6 | 2 |
| 4 | 28.3 | 22.0 | 2 |
| 5 | 19.9 | 24.5 | 2 |
| 6* | 16.3 | 17.9 | 2 |
| 7 | 38.3 | 16.7 | 2 |
| 8 | 22.4 | 16.3 | 2 |
| 9 | 21.2 | 16.2 | 2 |
| 10 | 27.6 | 16.2 | 2 |
| 11 | 23.6 | 15.6 | 2 |
| 12* | 61.6 | 71.6 | 2 |
| 13* | 25.5 | 45.8 | 2 |
| 14* | 29.5 | 42.1 | 2 |

* not according to the present invention

As shown in Tables 1 and 2, the molded articles obtained using the resin compositions 1 to 5 and 7 to 11 containing a vinylidene fluoride polymer having a percentage of irregular sequences of 4.3 % or greater had a low **YI** value even when the thickness was 2 mm.

### [Molded article production and evaluation 2]

Molded articles were produced and evaluated in the same manner as in [Molded article production and evaluation 1] with the exception that the conditions for hot pressing were changed to (A) 230°C, 2 minutes, and 5 MPa, or (B) 260°C, 2 minutes, and 5 MPa. Note that the resin compositions 1 and 6 were used as the resin compositions. The results are shown in Table 3.

**[Table 3]**

| Resin Composition | Pressing Conditions* | Haze % | YI value | Thickness mm |
|---|---|---|---|---|
| 1 | A | 25.9 | 17.9 | 2 |
| 1 | B | 28.3 | 30.7 | 2 |
| 6** | A | 15.2 | 21.5 | 2 |
| 6** | B | 15.3 | 45.9 | 2 |

| | |
|---|---|
| * Pressing conditions: | A 230°C, 2 min, 5 MPa |
| | B 260°C, 2 min, 5 MPa |
| ** not according to the present invcention | |

As shown in Tables 1 and 3, the molded article obtained using the resin composition 1 containing a vinylidene fluoride polymer having an absorbance ratio (A_{R}) of 0.09 or less had a low YI value (40 or lower) even when the pressing temperature was a higher temperature (260°C).

### [INDUSTRIAL APPLICABILITY]

The present invention can be used in highly transparent members such as optical members.

## Claims

1. A resin composition comprising a vinylidene fluoride polymer as a main component,
the resin composition further comprising an alkyl quaternary ammonium sulfate, and a percentage of irregular sequences in the vinylidene fluoride polymer being 4.3% or greater,
the percentage of irregular sequences being determined in such a manner that 40 mg of the vinylidene fluoride polymer is dissolved in 0.8 ml of deuterated dimethylformamide and ¹⁹F-NMR measurements are implemented at room temperature to obtain ¹⁹F-NMR spectrum having peaks at positions of - 91.6 ppm, -92.1 ppm, -94.7 ppm, -113.5 ppm, and -115.9 ppm, and the percentage of irregular sequences is calculated by equation (1) below: $Irregular Sequence Percentage \left(%\right) = \left[\left\{\left(S1+S2\right)/2\right\}/S0\right] \times 100$ (1)
where S0 is a total of surface areas of the peaks at the positions of -91.6 ppm, - 92.1 ppm, -94.7 ppm, -113.5 ppm, and -115.9 ppm, S1 is a surface area of the peak at the position of -113.5 ppm, and S2 is a surface area of the peak at the position of -115.9 ppm.

2. The resin composition according to claim 1, wherein the vinylidene fluoride polymer has an absorbance ratio (A_{R}) of not greater than 0.09, the absorbance ratio (A_{R}) being determined in such a manner that the vinylidene fluoride polymer is hot-pressed at 230°C to fabricate a pressed sheet with a thickness from 50 µm to 100 µm, an infrared absorption spectrum of the pressed sheet is measured in a range from 1500 cm⁻¹ to 4000 cm⁻¹ using an infrared spectrophotometer, and the absorbance ratio (A_{R}) is calculated by an equation below: ${A}_{R} = {A}_{1700 - 1800} / {A}_{3023}$ where A₁₇₀₀₋₁₈₀₀ is the maximum absorbance in a range from 1700 cm⁻¹ to 1800 cm⁻¹ when a line connecting absorbance at 1660 cm⁻¹ and absorbance at 1900 cm⁻¹ is defined as a baseline, and A₃₀₂₃ is the maximum absorbance at 3023 ± 10 cm⁻¹ when a line connecting absorbance at 2900 cm⁻¹ and absorbance at 3300 cm⁻¹ is defined as a baseline.

3. The resin composition according to claim 1 or 2, wherein a content of the alkyl quaternary ammonium sulfate is from 0.3 parts by weight to 10.0 parts by weight per 100 parts by weight of the vinylidene fluoride polymer.

4. The resin composition according to any one of claims 1 to 3, wherein the alkyl quaternary ammonium sulfate is an alkyl quaternary ammonium hydrogensulfate.

5. The resin composition according to any one of claims 1 to 4, wherein the alkyl quaternary ammonium sulfate is at least one selected from tetraethylammonium hydrogensulfate, tetrapropylammonium hydrogensulfate, and tetrabutylammonium hydrogensulfate.

6. The resin composition according to any one of claims 1 to 5, wherein the vinylidene fluoride polymer is a homopolymer of vinylidene fluoride or a copolymer of vinylidene fluoride and hexafluoropropylene.

7. A molded article of a resin composition comprising a vinylidene fluoride polymer as a main component,
the molded article being formed from the resin composition described in any one of claims 1 to 6, and
the molded article having a haze of not greater than 40%, a yellowness index (YI) value of not greater than 40, and a thickness of 1 mm or greater,
the haze being measured by JIS K7136 method as described in the description, and the YI value being obtained by measuring, through a reflection measurement method, any four locations of the molded article using a colorimetry color difference meter and calculating an average value of measurements at the four locations in accordance with ASTM D1925.

8. A method of producing a resin composition comprising a vinylidene fluoride polymer as a main component, the method comprising:
adding an alkyl quaternary ammonium sulfate to a vinylidene fluoride polymer having a percentage of irregular sequences of 4.3% or greater,
the percentage of irregular sequences being determined in such a manner that 40 mg of the vinylidene fluoride polymer is dissolved in 0.8 ml of deuterated dimethylformamide and ¹⁹F-NMR measurements are implemented at room temperature to obtain ¹⁹F-NMR spectrum having peaks at positions of - 91.6 ppm, -92.1 ppm, -94.7 ppm, -113.5 ppm, and -115.9 ppm, and the percentage of irregular sequences is calculated by equation (1) below: $Irregular Sequence Percentage \left(%\right) = \left[\left\{\left(S1+S2\right)/2\right\}/S0\right] \times 100$ (1)
where S0 is a total of surface areas of the peaks at the positions of -91.6 ppm, - 92.1 ppm, -94.7 ppm, -113.5 ppm, and -115.9 ppm, S1 is a surface area of the peak at the position of -113.5 ppm, and S2 is a surface area of the peak at the position of -115.9 ppm.

9. A method of producing a molded article of a resin composition comprising a vinylidene fluoride polymer as a main component, the method comprising: molding the resin composition at a temperature of at least 190°C,
wherein, the resin composition described in any one of claims 1 to 6 is used as the resin composition.

10. The method of producing a molded article according to claim 9, wherein a molded article having a thickness of 1 mm or greater is obtained in the molding.

## Patentansprüche

1. Harzzusammensetzung, umfassend ein Vinylidenfluoridpolymer als Hauptkomponente,
die Harzzusammensetzung ferner umfassend ein quartäres Alkylammoniumsulfat und wobei ein Prozentsatz an unregelmäßigen Sequenzen in dem Vinylidenfluoridpolymer 4,3 % oder mehr beträgt,
wobei der Prozentsatz an unregelmäßigen Sequenzen derart bestimmt wird, dass 40 mg des Vinylidenfluoridpolymers in 0,8 ml deuteriertem Dimethylformamid gelöst werden und ¹⁹F-NMR-Messungen bei Raumtemperatur umgesetzt werden, um ein ¹⁹F-NMR-Spektrum, das Spitzen an Positionen von -91,6 ppm, -92,1 ppm, - 94,7 ppm, -113,5 ppm und -115,9 ppm aufweist, zu erhalten, und der Prozentsatz an unregelmäßigen Sequenzen durch die nachstehende Gleichung (1) berechnet wird: $Prozentsatz unregelmäßiger Sequenzen \left(%\right) = \left[\left\{\left(S1+S2\right)/2\right\}/S0\right] \times 100$ (1)
wobei S0 eine Summe der Oberflächenbereiche der Spitzen an den Positionen von -91,6 ppm, - 92,1 ppm, -94,7 ppm, -113,5 ppm und -115,9 ppm ist, S1 ein Oberflächenbereich der Spitze an der Position von -113,5 ppm ist und S2 ein Oberflächenbereich der Spitze an der Position von -115,9 ppm ist.

2. Harzzusammensetzung nach Anspruch 1, wobei das Vinylidenfluoridpolymer ein Absorptionsverhältnis (A_{R}) von nicht mehr als 0,09 aufweist, wobei das Absorptionsverhältnis (A_{R}) derart bestimmt wird, dass das Vinylidenfluoridpolymer bei 230 °C heißgepresst wird, um eine gepresste Folie mit einer Dicke von 50 µm bis 100 µm zu fertigen, ein Infrarotabsorptionsspektrum der gepressten Folie in einem Bereich von 1500 cm⁻¹ bis 4000 cm⁻¹ unter Verwendung eines Infrarotspektralfotometers gemessen wird und das Absorptionsverhältnis (A_{R}) durch eine nachstehende Gleichung berechnet wird: ${A}_{R} = {A}_{1700 - 1800} / {A}_{3023}$ wobei A₁₇₀₀₋₁₈₀₀ der maximale Absorptionsgrad in einem Bereich von 1700 cm⁻¹ bis 1800 cm⁻¹ liegt, wenn eine Linie, die den Absorptionsgrad bei 1660 cm⁻¹ und den Absorptionsgrad bei 1900 cm⁻¹ verbindet, als Basislinie definiert ist, und A₃₀₂₃ der maximale Absorptionsgrad bei 3023 ± 10 cm⁻¹ ist, wenn eine Linie, die den Absorptionsgrad bei 2900 cm⁻¹ und den Absorptionsgrad bei 3300 cm⁻¹ verbindet, als Basislinie definiert ist.

3. Harzzusammensetzung nach Anspruch 1 oder 2, wobei ein Gehalt des quartären Alkylammoniumsulfats von 0,3 Gewichtsteile bis 10,0 Gewichtsteile pro 100 Gewichtsteile des Vinylidenfluoridpolymers beträgt.

4. Harzzusammensetzung nach einem der Ansprüche 1 bis 3, wobei das quartäre Alkylammoniumsulfat ein quartäres Alkylammoniumhydrogensulfat ist.

5. Harzzusammensetzung nach einem der Ansprüche 1 bis 4, wobei das quartäre Alkylammoniumsulfat mindestens eines ist, ausgewählt aus Tetraethylammoniumhydrogensulfat, Tetrapropylammoniumhydrogensulfat und Tetrabutylammoniumhydrogensulfat.

6. Harzzusammensetzung nach einem der Ansprüche 1 bis 5, wobei das Vinylidenfluoridpolymer ein Homopolymer von Vinylidenfluorid oder eines Vinylidenfluoridcopolymers und Hexafluorpropylen ist.

7. Formartikel aus einer Harzzusammensetzung, umfassend ein Vinylidenfluoridpolymer als eine Hauptkomponente,
wobei der Formartikel aus der Harzzusammensetzung, die in einem der Ansprüche 1 bis 6 beschrieben ist, geformt ist und
der Formartikel eine Trübung von nicht mehr als 40 %, einen Gelbindex (YI)-Wert von nicht mehr als 40 und eine Dicke von 1 mm oder mehr aufweist,
wobei die Trübung durch das JIS K7136-Verfahren, wie in der Beschreibung beschrieben, gemessen wird und der YI-Wert durch Messen über ein Reflexionsmessverfahren beliebige vier Stellen des Formartikels unter Verwendung eines Kolorimetrie-Farbdifferenzmessgeräts und Berechnen eines Durchschnittswerts der Messungen an den vier Stellen gemäß ASTM D1925 erhalten wird.

8. Verfahren zum Herstellen einer Harzzusammensetzung, umfassend ein Vinylidenfluoridpolymer als eine Hauptkomponente, das Verfahren umfassend:
Zugeben eines quartären Alkylammoniumsulfats zu einem Vinylidenfluoridpolymer, das einen Prozentsatz an unregelmäßigen Sequenzen von 4,3 % oder mehr aufweist,
wobei der Prozentsatz an unregelmäßigen Sequenzen derart bestimmt wird, dass 40 mg des Vinylidenfluoridpolymers in 0,8 ml deuteriertem Dimethylformamid gelöst werden und ¹⁹F-NMR-Messungen bei Raumtemperatur umgesetzt werden, um ein ¹⁹F-NMR-Spektrum, das Spitzen an Positionen von - 91,6 ppm, -92,1 ppm, -94,7 ppm, -113,5 ppm und -115,9 ppm aufweist, zu erhalten, und der Prozentsatz an unregelmäßigen Sequenzen durch die nachstehende Gleichung (1) berechnet wird: $Prozentsatz unregelmäßiger Sequenzen \left(%\right) = \left[\left\{\left(S1+S2\right)/2\right\}/S0\right] \times 100$ (1)
wobei S0 eine Summe der Oberflächenbereiche der Spitzen an den Positionen von -91,6 ppm, - 92,1 ppm, -94,7 ppm, -113,5 ppm und -115,9 ppm ist, S1 ein Oberflächenbereich der Spitze an der Position von -113,5 ppm ist und S2 ein Oberflächenbereich der Spitze an der Position von -115,9 ppm ist.

9. Verfahren zum Herstellen eines Formartikels aus einer Harzzusammensetzung, umfassend ein Vinylidenfluoridpolymer als eine Hauptkomponente, das Verfahren umfassend:
Formen der Harzzusammensetzung bei einer Temperatur von mindestens 190 °C, wobei die in einem der Ansprüche 1 bis 6 beschriebene Harzzusammensetzung als die Harzzusammensetzung verwendet wird.

10. Verfahren zum Herstellen eines Formartikels nach Anspruch 9, wobei ein Formartikel, der eine Dicke von 1 mm oder mehr beim Formen erhalten wird.

## Revendications

1. Composition de résine comprenant un polymère de fluorure de vinylidène en tant que composant principal,
la composition de résine comprenant en outre un sulfate d'alkyl-ammonium quaternaire, et un pourcentage de séquences irrégulières dans le polymère de fluorure de vinylidène étant de 4,3 % ou plus,
le pourcentage de séquences irrégulières étant déterminé d'une manière telle que 40 mg du polymère de fluorure de vinylidène sont dissous dans 0,8 ml de diméthylformamide deutéré et des mesures ¹⁹F-RMN sont implémentées à la température ambiante pour obtenir un spectre ¹⁹F-RMN ayant des pics à des positions de -91,6 ppm, -92,1 ppm, -94,7 ppm, -113,5 ppm et -115,9 ppm, et le pourcentage de séquences irrégulières est calculé par l'équation (1) ci-dessous : $Pourcentage de séquences irrégulières \left(%\right) = \left[\left\{\left(S1+S2\right)/2\right\}/S0\right] \times 100$ (1)
où S0 est un total des superficies des pics aux positions de -91,6 ppm, - 92,1 ppm, -94,7 ppm, -113,5 ppm et -115,9 ppm, S1 est une superficie du pic à la position de -113,5 ppm, et S2 est une superficie du pic à la position de -115,9 ppm.

2. Composition de résine selon la revendication 1, dans laquelle le polymère de fluorure de vinylidène a un rapport d'absorbance (A_{R}) ne dépassant pas 0,09, le rapport d'absorbance (A_{R}) étant déterminé d'une manière telle que le polymère de fluorure de vinylidène est pressé à chaud à 230 °C pour fabriquer une feuille pressée avec une épaisseur allant de 50 µm à 100 µm, un spectre d'absorption infrarouge de la feuille pressée est mesuré dans une plage allant de 1500 cm⁻¹ à 4000 cm⁻¹ à l'aide d'un spectrophotomètre infrarouge, et le rapport d'absorbance (A_{R}) est calculé par une équation ci-dessous : ${A}_{R} = {A}_{1700 - 1800} / {A}_{3023}$ où A₁₇₀₀₋₁₈₀₀ est l'absorbance maximale dans une plage allant de 1700 cm⁻¹ à 1800 cm⁻¹ lorsqu'une ligne reliant l'absorbance à 1660 cm⁻¹ et l'absorbance à 1900 cm⁻¹ est définie en tant que ligne de base, et A₃₀₂₃ est l'absorbance maximale à 3023 ± 10 cm⁻¹ lorsqu'une ligne reliant l'absorbance à 2900 cm⁻¹ et l'absorbance à 3300 cm⁻¹ est définie en tant que ligne de base.

3. Composition de résine selon la revendication 1 ou 2, dans laquelle une teneur en sulfate d'alkyl-ammonium quaternaire va de 0,3 partie en poids à 10,0 parties en poids pour 100 parties en poids du polymère de fluorure de vinylidène.

4. Composition de résine selon l'une quelconque des revendications 1 à 3, dans laquelle le sulfate d'alkyl-ammonium quaternaire est un hydrogénosulfate d'alkyl-ammonium quaternaire.

5. Composition de résine selon l'une quelconque des revendications 1 à 4, dans laquelle le sulfate d'alkyl-ammonium quaternaire est au moins l'un choisi parmi hydrogénosulfate de tétraéthylammonium, hydrogénosulfate de tétrapropylammonium et hydrogénosulfate de tétrabutylammonium.

6. Composition de résine selon l'une quelconque des revendications 1 à 5, dans laquelle le polymère de fluorure de vinylidène est un homopolymère de fluorure de vinylidène ou un copolymère de fluorure de vinylidène et d'hexafluoropropylène.

7. Article moulé d'une composition de résine comprenant un polymère de fluorure de vinylidène en tant que composant principal,
l'article moulé étant formé à partir de la composition de résine décrite dans l'une quelconque des revendications 1 à 6, et
l'article moulé ayant un trouble ne dépassant pas 40 %, une valeur d'indice de teinte jaune (YI) ne dépassant pas 40, et une épaisseur de 1 mm ou plus,
le trouble étant mesuré par le procédé JIS K7136 tel que décrit dans la description, et la valeur YI étant obtenue en mesurant, par le biais d'un procédé de mesure de réflexion, quatre localisations quelconques de l'article moulé à l'aide d'un mesureur de différence de couleur de colorimétrie et en calculant une valeur moyenne des mesures au niveau des quatre localisations conformément à ASTM D1925.

8. Procédé de production d'une composition de résine comprenant un polymère de fluorure de vinylidène en tant que composant principal, le procédé comprenant :
l'ajout d'un sulfate d'alkyl-ammonium quaternaire à un polymère de fluorure de vinylidène ayant un pourcentage de séquences irrégulières de 4,3 % ou plus,
le pourcentage de séquences irrégulières étant déterminé d'une manière telle que 40 mg du polymère de fluorure de vinylidène sont dissous dans 0,8 ml de diméthylformamide deutéré et des mesures ¹⁹F-RMN sont implémentées à la température ambiante pour obtenir un spectre ¹⁹F-RMN ayant des pics à des positions de -91,6 ppm, -92,1 ppm, -94,7 ppm, -113,5 ppm et -115,9 ppm, et le pourcentage de séquences irrégulières est calculé par l'équation (1) ci-dessous : $Pourcentage de séquences irrégulières \left(%\right) = \left[\left\{\left(S1+S2\right)/2\right\}/S0\right] \times 100$ (1)
où S0 est un total des superficies des pics aux positions de -91,6 ppm, - 92,1 ppm, -94,7 ppm, -113,5 ppm et -115,9 ppm, S1 est une superficie du pic à la position de -113,5 ppm, et S2 est une superficie du pic à la position de -115,9 ppm.

9. Procédé de production d'un article moulé d'une composition de résine comprenant un polymère de fluorure de vinylidène en tant que composant principal, le procédé comprenant :
le moulage de la composition de résine à une température d'au moins 190 °C, dans lequel, la composition de résine décrite dans l'une quelconque des revendications 1 à 6 est utilisée en guise de composition de résine.

10. Procédé de production d'un article moulé selon la revendication 9, dans lequel un article moulé ayant une épaisseur de 1 mm ou plus est obtenu lors du moulage.
